(19) Europäisches Patentamt
European Patent Office
Office européen des brevets

(11) **EP 3 496 513 B1**

(12) **EUROPEAN PATENT SPECIFICATION**

(45) Date of publication and mention
of the grant of the patent:
**29.07.2020 Bulletin 2020/31**

(21) Application number: **17205673.1**

(22) Date of filing: **06.12.2017**

(51) Int Cl.:
*H05B 47/105* (2020.01)          *B60Q 1/14* (2006.01)
*H05B 45/50* (2020.01)          *H05B 45/48* (2020.01)
*F21S 41/141* (2018.01)          *F21S 41/153* (2018.01)
*F21S 41/663* (2018.01)

(54) **MATRIX HEADLAMP CONTROL APPARATUS**

MATRIXSCHEINWERFERSTEUERUNGSVORRICHTUNG

APPAREIL DE COMMANDE DE PHARE DE MATRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.06.2019 Bulletin 2019/24**

(73) Proprietor: **ROHM CO., LTD.**
**Kyoto 615-8585 (JP)**

(72) Inventor: **Habib, Irfan**
**Kyoto 615-8585 (JP)**

(74) Representative: **Isarpatent**
**Patent- und Rechtsanwälte Behnisch Barth
Charles
Hassa Peckmann & Partner mbB
Friedrichstrasse 31
80801 München (DE)**

(56) References cited:
**JP-A- 2012 243 723      US-A1- 2012 112 656
US-A1- 2017 253 172      US-B1- 9 769 898**

**Description**

The invention relates to a matrix headlamp control apparatus for controlling a brightness of a headlamp, in particular a headlamp of a vehicle.

US 2017/253172 A1 describes a vehicle headlamp comprising at least one light-emitting diode, wherein said at least one light-emitting diode is configured to operate as a detector of a light source. The headlamp may have a control unit to make the light-emitting diode operate alternately as a detector of a light source and as a light emitter.

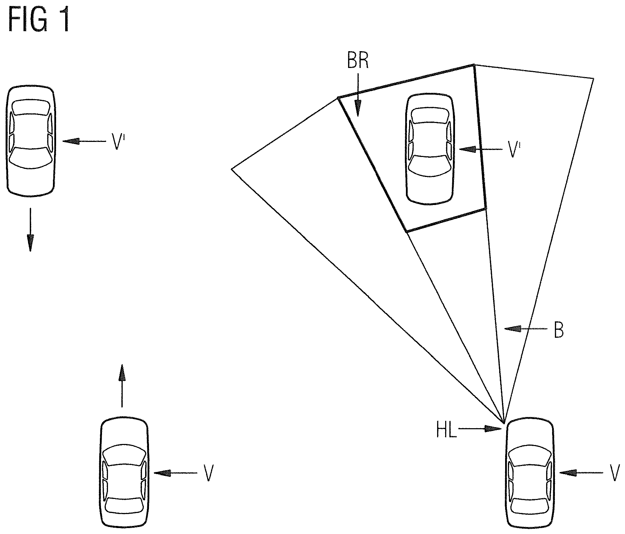

In many applications, matrix headlamps can be used. Matrix headlamps comprise a matrix of light-emitting diodes LEDs. Matrix headlamps can for instance be used in vehicles such as cars. Headlamps, running on high beam, require a dimming while the car encounters other vehicles on a road as also illustrated in Fig. 1. As can be seen in Fig. 1, a car or a vehicle V having two headlamps on its front side encounters another vehicle V' on a traffic road. As illustrated in Fig. 1 on the right side, the LED matrix of the headlamp HL on the left front side of the vehicle V can be partially dimmed to provide a blanking region BR in the light beam B generated by the left headlamp so that the driver of the encountered vehicle V' is not disturbed by the generated light. As shown in Fig. 1, the head beam cone B is dimmed where the oncoming vehicle V' is located. This ensures that the road in front of the vehicle V comprising the matrix headlamp is well illuminated in all traffic situations and also at different speeds of the vehicle V without disturbing other traffic participants. With a matrix LED headlamp, each individual light-emitting diode LED can be controlled to create bright and dark regions in the headlamp beam cone B generated by the matrix headlamp. In a conventional matrix headlamp, several LED controllers can be provided each controlling an associated group of LEDs within the LED matrix. To create an effective blanking region in the beam, the PWM frequency and phase of the individual controller ICs have to be synchronized with each other. However, this synchronization may not generate any flicker or any drastic change of the brightness of the light-emitting diodes controlled by the respective LED controller IC.

Accordingly, it is an object of the present invention to provide a matrix headlamp control apparatus for controlling a brightness of a headlamp comprising a matrix of light-emitting diodes where a flickering on the brightness of the controlled LEDs is avoided.

This object is achieved by a matrix headlamp control apparatus comprising the features of claim 1. Further aspects of the invention are included in the dependent claims.

According to a first aspect, a matrix headlamp control apparatus for controlling a brightness of a headlamp comprising a matrix of light-emitting diodes, LEDs, consisting of LED groups of light-emitting diodes, wherein each LED group is controlled by an associated LED controller integrated circuit, IC, wherein a Master LED controller IC is adapted to generate a PWM synchronization signal applied to Slave LED controller ICs to synchronize frequency and phase of all pulse width modulated, PWM, signals supplied by the different LED controller ICs to the respective LED groups.

In a possible embodiment of the matrix headlamp control apparatus according to the first aspect of the present invention, the matrix headlamp control apparatus comprises one LED controller IC configured as the Master LED controller IC and a number of LED controller ICs configured as Slave LED controller ICs connected to the Master LED controller IC via a PWM synchronization signal line which is adapted to carry the PWM synchronization signal generated by said Master LED controller IC to the Slave LED controller ICs.

In a further possible embodiment of the matrix headlamp control apparatus according to the first aspect of the present invention, each LED controller IC comprises a digital control block including a frequency and phase synchronization unit.

In a possible embodiment of the matrix headlamp control apparatus according to the first aspect of the present invention, the frequency and phase synchronization unit within the digital control block of the LED controller IC is adapted to generate the PWM synchronization signal and to output the PWM synchronization signal via the PWM synchronization line if the respective LED controller IC is configured as a Master LED controller IC.

In a still further possible embodiment of the matrix headlamp control apparatus according to the first aspect of the present invention, the frequency and phase synchronization unit of the digital control block of the LED controller IC is adapted to receive the PWM synchronization signal as an input signal from the PWM synchronization line to synchronize frequency and phase of PWM signals supplied to light-emitting diodes of an LED group connected to the LED controller IC if the respective LED controller IC is configured as a Slave LED controller IC.

In a further possible embodiment of the matrix headlamp control apparatus according to the first aspect of the present invention, the frequency and phase synchronization unit of the configured Master LED controller IC has an oscillator adapted to generate a high frequency oscillation clock signal, $CLK_{OSC}$, used to derive an internal clock signal applied to an N-bit PWM counter of said frequency and phase synchronization unit.

In a further possible embodiment of the matrix headlamp control apparatus according to the first aspect of the present invention, a most significant bit, MSB, of the N-bit PWM counter is output by the Master LED controller IC via the PWM synchronization signal line to the Slave LED controller ICs of said matrix headlamp control apparatus.

In a further possible embodiment of the matrix headlamp control apparatus according to the first aspect of the present invention, the frequency and phase synchronization unit of each configured Slave LED controller IC has a frequency synchronization block adapted to generate a frequency calibration signal from the received PWM synchronization signal received via the PWM synchronization signal line applied to an oscillator adapted to generate a high frequency clock signal ($CLK_{OSC}$) used to derive an internal clock signal (CLK) applied to the frequency synchronization block and applied to a phase synchronization block which is adapted to generate a clock cycle skip value depending on a phase relationship between a most significant bit, MSB, of an N-bit PWM counter of said frequency and phase synchronization unit and the PWM synchronization signal received via the PWM synchronization signal line, wherein the generated clock cycle skip value is added to the counter value of the N-bit PWM counter.

In a possible embodiment of the matrix headlamp control apparatus the frequency and phase synchronization unit of the LED controller IC comprises a clock divider adapted to divide the high-frequency oscillator clock signal ($CLKI_{OSC}$) to derive the internal clock signal (CLK) applied to the N-bit PWM counter of said frequency and phase synchronization unit.

In a further possible embodiment of the matrix headlamp control apparatus according to the first aspect of the present invention, each LED controller IC comprises a chip select input adapted to apply hard-coded configuration bits used to configure the LED controller IC as a Master LED controller IC or as a Slave LED controller IC.

In a further possible embodiment of the matrix headlamp control apparatus according to the first aspect of the present invention, each LED controller IC comprises several individually controlled LED channels used to supply PWM signals to LEDs of the LED group connected to the respective LED controller IC for adjustment of the light intensity of light generated by the respective LEDs.

In a further possible embodiment of the matrix headlamp control apparatus according to the first aspect of the present invention, the oscillator of the frequency and synchronization unit of the LED controller IC comprises an RC oscillator.

In a further possible embodiment of the matrix headlamp control apparatus according to the first aspect of the present invention, the LED controller IC comprises an SPI interface used for communication to provide a light pattern, setting an operation mode, adjusting a PWM frequency and/or for diagnostic purposes.

In a still further possible embodiment of the matrix headlamp control apparatus according to the first aspect of the present invention, the LED controller IC comprises for each LED channel internal registers to provide different PWM light patterns which can be preprogrammed and selected through the SPI interface of the LED controller IC.

In a still further possible embodiment of the matrix headlamp control apparatus according to the first aspect of the present invention, each LED channel of the LED controller IC comprises an open and short detection circuit used to bypass an internal switch if an LED has a malfunction.

In a further possible embodiment of the matrix headlamp control apparatus according to the first aspect of the present invention, channel drivers of the LED channels receive a supply voltage from a charge pump circuit of the LED controller IC.

In a further possible embodiment of the matrix headlamp control apparatus according to the first aspect of the present invention, the LED controller IC comprises an internal temperature protection circuit adapted to generate a warning signal if the LED controller IC is overheating.

The invention further provides according to a second aspect a vehicle comprising the features of claim 14.

The invention provides according to the second aspect a vehicle having at least one headlamp comprising a matrix of light-emitting diodes LEDs controlled by a matrix headlamp control apparatus according to the first aspect of the present invention.

In the following, possible embodiments of the different aspects of the present invention are described in more detail with reference to the enclosed figures.

Fig. 1    shows a schematic diagram for illustrating a problem underlying the present invention;

Fig. 2    shows a block diagram for illustrating a possible exemplary embodiment of a matrix headlamp control apparatus according to the first aspect of the present invention;

Fig. 3    shows a block diagram of a possible exemplary embodiment of a LED controller IC which can be used in a matrix headlamp control apparatus according to the first aspect of the present invention;

Fig. 4    shows a block diagram for illustrating a possible exemplary embodiment of a frequency and phase synchronization unit within a LED controller IC of a matrix headlamp control apparatus according to the first aspect of the present invention;

Fig. 5    shows a signal diagram for illustrating a frequency synchronization performed within a matrix headlamp control apparatus according to the first aspect of the present invention;

Fig. 6     shows a signal diagram for illustrating a step size during frequency synchronization;

Fig. 7     shows a further signal diagram for illustrating a step size during frequency synchronization;

Fig. 8     shows signal diagrams for illustrating a phase synchronization performed within a matrix headlamp control apparatus according to the first aspect of the present invention;

Fig. 9     shows a schematic diagram for illustrating an extra clock cycle distribution performed in a possible exemplary implementation of a matrix headlamp control apparatus according to the first aspect of the present invention.

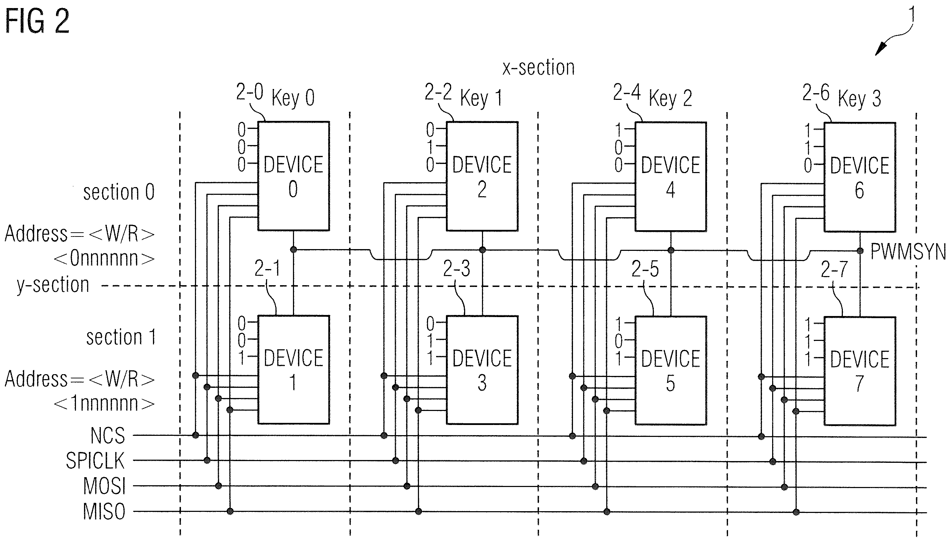

Fig. 2 shows a block diagram of a possible exemplary embodiment of a matrix headlamp control apparatus 1 according to the first aspect of the present invention. The matrix headlamp control apparatus 1 as shown in Fig. 2 is used for controlling a brightness of a headlamp having a matrix of light-emitting diodes LEDs. The matrix of light-emitting diodes LEDs consists of different LED groups of light-emitting diodes LEDs. Each LED group can be controlled by an associated LED controller integrated circuit, IC, 2. In the illustrated embodiment, the matrix headlamp control apparatus 1 comprises eight LED controller integrated circuits 2-0 to 2-7 each adapted to control a predetermined number of light-emitting diodes LEDs forming an LED group within the LED matrix of the matrix headlamp. The matrix headlamp control apparatus 1 comprises one LED controller IC which is configured as a Master LED controller IC. The remaining LED controller ICs form Slave LED controller ICs. In the illustrated exemplary embodiment of Fig. 2, the LED controller IC 2-7 is configured as the Master LED controller IC. The remaining LED controller ICs 2-0 to 2-6 are configured as Slave LED controller ICs. In the illustrated exemplary embodiment of Fig. 2, the Master controller IC 2-7 is configured by the configuration bits 111. The other bit patterns configuration bits configure the respective LED controller IC as a Slave controller IC. The Master LED controller IC, i.e. LED controller IC 2-7 in the embodiment of Fig. 2, is adapted to generate a PWM synchronization signal which is applied to the Slave LED controller ICs 2-0 to 2-6 to synchronize frequency and phase of all pulsed width modulated PWM signals supplied by the different LED controller ICs to the respective LED groups. In the illustrated embodiment of Fig. 2, the Master LED controller IC 2-7 is connected to the other Slave LED controller ICs 2-0 to 2-6 via a PWM synchronization signal line PWMSYNC. The PWM synchronization signal line PWMSYNC is used to carry a PWM synchronization signal generated by the Master LED controller IC 2-7. The Master LED controller IC generates the PWM synchronization signal for all other LED controller ICs of the matrix headlamp control apparatus 1 shown in Fig. 2. The different LED controller ICs shown in Fig. 2 are connected to an SPI input (MOSI) (Master Out - Slave In) line and an SPI output (MISO) (Master In - Slave Out) line as shown in Fig. 2. Further, the LED controller ICs 2-i are connected to an SPI clock signal line as shown in Fig. 2. Moreover, the different LED controller ICs 2-i are connected to an NCS line.

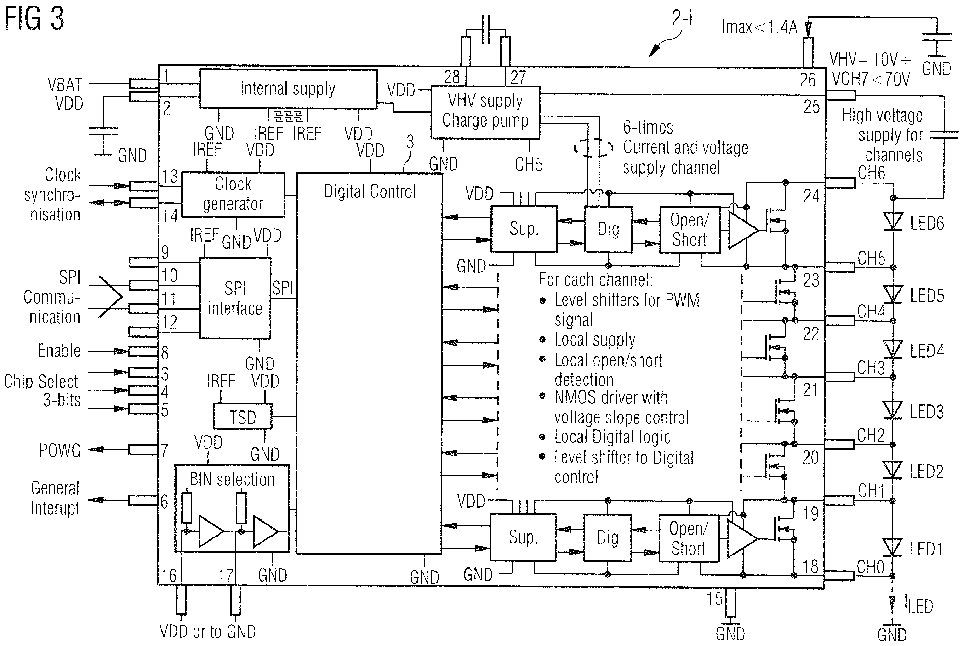

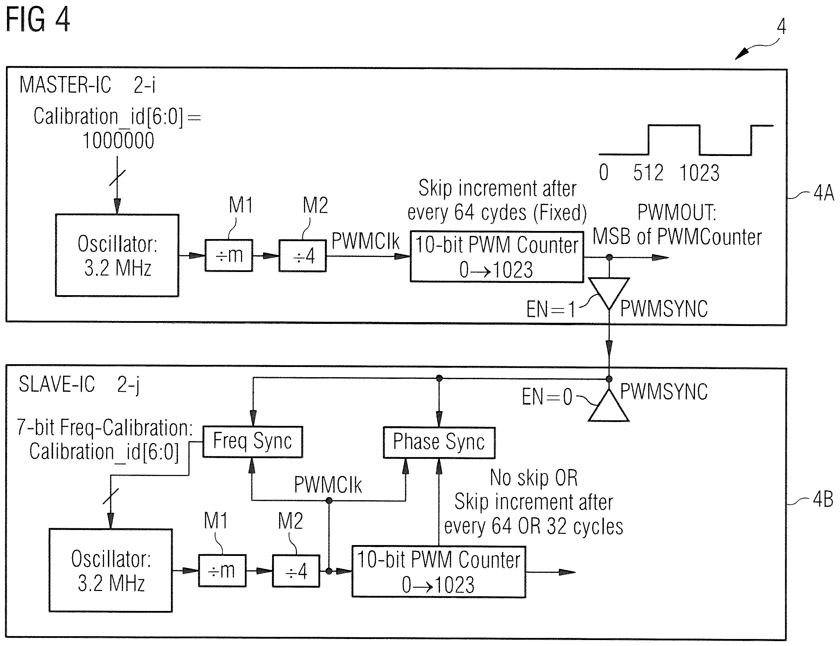

Fig. 3 shows a block diagram of a possible exemplary embodiment of an LED controller IC 2-i which can form part of a matrix headlamp control apparatus 1 according to the first aspect of the present invention. The LED controller IC 2 comprises in the shown embodiment a digital control block 3 which includes a frequency and phase synchronization unit as illustrated in the block diagram of Fig. 4. The frequency and phase synchronization unit 4 is provided within each LED controller IC 2. Depending on the configuration of the LED controller IC 2 as a Master LED controller IC or as a Slave LED controller IC, the frequency and phase synchronization unit 4 can operate differently.

In the block diagram of Fig. 4, a first frequency and phase synchronization unit 4A as shown above is connected via the PWM synchronization signal line PWMSYNC to the frequency and phase synchronization unit 4B of a Slave LED controller IC. Accordingly, the frequency and phase synchronization unit 4A shown in Fig. 4 is located in the Master LED controller IC 2-7 of the embodiment illustrated in Fig. 2 and the frequency and phase synchronization unit 4B is located in any of the Slave LED controller ICs 2-0 to 2-6 of the matrix headlamp control apparatus 1 shown in Fig. 2. The frequency and phase synchronization unit 4A of the Master LED controller IC is adapted to generate the PWM synchronization signal which is output via the PWM synchronization signal line to the Slave LED controller ICs.

The frequency and phase synchronization unit 4B integrated in each of the Slave LED controller ICs 2-0 to 2-6 is adapted to receive the PWM synchronization signal as an input signal from the PWM synchronization line PWM SYNC to synchronize frequency and phase of PWM signals supplied to the light-emitting diodes LEDs of an LED group connected to the respective LED controller IC. Also, the Master LED controller IC 2-7 provides PWM signals to local light-emitting diodes LEDs of an associated group of the Master LED controller IC 2-7. As can be seen in Fig. 4, the frequency and phase synchronization unit 4A of the configured Master LED controller IC, e.g. the Master LED controller IC 2-7 as shown in Fig. 2, has an oscillator adapted to generate a high frequency oscillator clock signal $CLK_{OSC}$. In the illustrated specific example, the oscillator of the frequency and phase synchronization unit 4A generates a high-frequency oscillator clock signal with a frequency of 3.2 MHz. The generated high-frequency oscillator clock signal $(CLK_{OSC})$ is used to derive a clock signal CLK applied to an N-bit PWM counter of the frequency and phase synchronization unit 4A as shown in Fig. 4. In the illustrated embodiment of Fig. 4, the N-bit PWM counter is a 10-bit PWM counter counting from 0 to 1023. The most significant bit MSB of the 10-bit PWM counter of the frequency and phase synchronization unit 4A is output by the Master LED controller IC via the PWM synchronization signal line PWMSYNC to the Slave LED controller ICs of the matrix headlamp control apparatus 1. The frequency and phase synchronization unit 4A of the Master LED controller IC 2-7 comprises in the illustrated embodiment a clock divider adapted to divide the high-frequency oscillation clock signal $CLK_{OSC}$ of e.g. 3.2 MHz to derive the internal clock signal CLK applied to the N-bit PWM counter of the frequency and phase synchronization unit 4A. In a possible embodiment, the clock divider divides the high-frequency clock signal $CLK_{OSC}$ generated by the internal oscillator in two steps, e.g. first by a factor of M1 and then by a factor M2 as shown in Fig. 4. In a possible implementation, the first factor M1 is variable and can be set via an SPI interface of the respective LED controller IC. The second factor M2 can be fixed to a predetermined factor of e.g. 4. The variable factor M1 can for instance be 1, 4, 8 applied to the LED controller IC via the SPI interface.

In the illustrated embodiment shown in Fig. 4, the frequency and phase synchronization unit 4B of the configured Slave LED controller IC comprises a frequency synchronization block and a phase synchronization block as shown in Fig. 4. The frequency synchronization block is adapted to generate a frequency calibration signal from the received PWM synchronization signal which the frequency synchronization block receives via the PWM synchronization signal line PWMSYNC. The generated frequency calibration signal is applied to a local internal oscillator which generates a high-frequency clock signal of e.g. 3.2 MHz which is used to derive an internal clock signal CLK which can be applied to a N-bit PWM counter of the frequency and phase synchronization unit 4B. The internal clock signal CLK is further applied to the frequency synchronization block and the phase synchronization block of the frequency and phase synchronization unit 4B as shown in Fig. 4. The frequency and phase synchronization unit 4B also comprises a clock divider adapted to divide the high-frequency oscillator clock signal $CLK_{OSC}$ generated by the internal oscillator in two stages to derive the internal clock signal CLK applied to the N-bit PWM counter of the frequency and phase synchronization unit 4B. A first factor M1 of the divider can be variable and set via the SPI interface. A second factor M2 can be a fixed factor of e.g. 4. The derived internal clock signal CLK is applied to the internal phase synchronization block which is adapted to generate a clock cycle skip value depending on a phase relationship between a most significant bit MSB of the N-bit PWM counter of the frequency and phase synchronization unit 4B and the PWM synchronization signal received via the PWM synchronization signal line PWMSYNC from the Master LED controller IC. The generated clock cycle skip value is supplied to the N-bit PWM counter and added to the counter value of the N-bit PWM counter. The frequency and phase synchronization unit generates the PWMSYNC signal while in Master configuration, whereas in Slave configuration, the frequency and phase synchronization unit receives the PWMSYNC signal as input and performs a frequency calibration of the clock generation block. Further, it performs a phase synchronization of the internal PWM counter to the received PWM synchronization signal. The PWM counter period is the time period of the N-bit PWM counter counting from 0 to 1023. In a possible implementation, there is a provision of adding 0, 16 or 32 extra clock cycles while counting from 0 to 1023. In the illustrated embodiment of Fig. 4, the frequency synchronization block can generate a 7-bit frequency calibration signal (calibration ID [6:0]) to the internal oscillator. The oscillator frequency can vary linearly with respect to the calibration signal received from the frequency synchronization block. The phase synchronization block is adapted to generate a signal which indicates to the PWM counter to add 0, 16 or 32 extra clock cycles while counting from 0 to 1023 in the illustrated implementation.

If the LED controller IC is configured as a Master IC both the frequency and the phase synchronization block are disabled. The frequency synchronization block fixes the calibration ID in a possible embodiment at a mean value of e.g. 1000000 as illustrated in Fig. 4, while the phase synchronization block is set to skip PWM counter increments at a fixed interval of 64 clock cycles (add extra 1024/64 = 16 PWM clock cycles while counting from 0 to 1023).

The Slave LED controller IC can take the PWM synchronization signal as an input signal and performs a frequency and phase synchronization. The frequency synchronization block of the frequency and phase synchronization unit 4B of the Slave controller IC is adapted to generate in the illustrated embodiment a 7-bit frequency calibration signal (calibration ID [6:0]) applied to the oscillator while the phase synchronization block generates a signal which indicates to the PWM counter to add either 0, 16 or 32 extra clock cycles to the counting value while counting from 0 to 1023. The extra clock cycles can be achieved by skipping the counter increment every 0, 64 or 32 PWM clock cycles, respectively.

In the illustrated embodiment, each LED controller IC has an internal 10 bit PWM counter. The PWM clock signal is derived from the oscillator clock. In the illustrated embodiment, a PWM cycle consists of 1024 internal PWM clock cycles. A PWM signal for each individual LED is derived from the internal PWM counter of each controller IC.

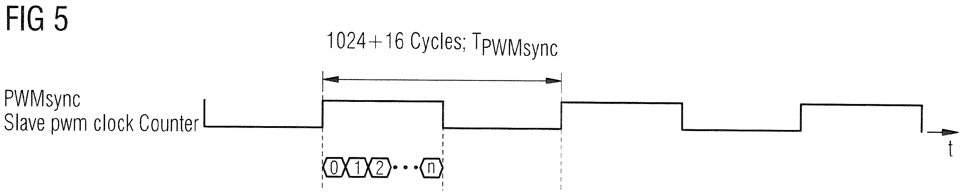

An internal oscillator of each controller IC can comprise a 7-bit frequency calibration control input (calibration ID). By varying the calibration ID bits, the frequency of the oscillator can be increased or decreased linearly, e.g. up to 40% of its normal value. A default value of the calibration ID can be set to 1000000 and corresponds to a high-frequency clock signal of 3.2 MHz. The Master controller IC generates the PWM synchronization signal and is formed by the most significant bit MSB of its 10-bit PWM counter. The PWMSYNC signal can comprise a time period of 1024 + 16 PWM cycles and can comprise a 50% duty cycle as also illustrated in Fig. 5. Fig. 5 shows a signal diagram illustrating the PWM synchronization signal output by the Master LED controller IC to the Slave LED controller ICs. To achieve frequency synchronization between the different controller ICs a number of clock cycles n of the internal Slave PWM clock signal during the time when the PWMSYNC signal is high are counted as also illustrated in Fig. 5. When the PWMSYNC signal is logically low, further handling depends on the number of clock cycles n.

If n is less than 519, the calibration ID is decreased by 1 count to decrease the Slave time period, e.g. to increase frequency.

If the number of clock cycles n is more than 519, the calibration ID is increased by 1 count to increase the Slave time period, e.g. to decrease its frequency.

If the number of clock cycles n is exactly 519, no change takes place.

These steps can be repeated continuously. After certain calibration steps where the calibration ID is either increased or decreased, eventually the Slave oscillator frequency gets synchronized with the Master oscillator frequency.

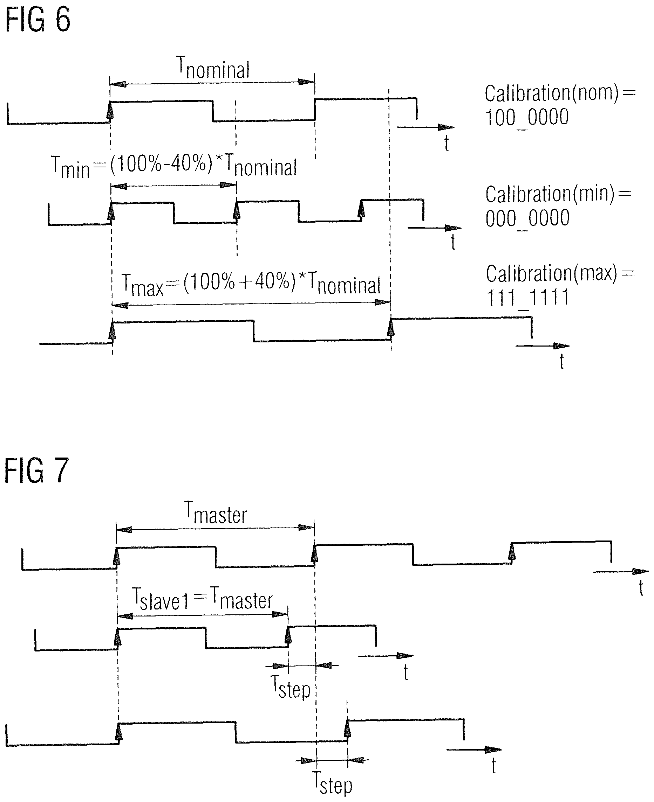

Figs. 6, 7 illustrate a maximum variation in time period of the Master and Slave after calibration.

As shown in Fig. 6, the default calibration value is 1000000 by setting the minimum calibration value of 000 0000 the nominal time period is reduced by 40% to its minimum time period value Tmin. By increasing the calibration value to its maximum value 111 1111, the nominal time period can be increased by 40% to its maximum value Tmax.

Accordingly, the calibration range = [(100% + 40%) - (100% - 40%)] x Tnominal = 80% x Tnominal.

$$\text{The time step size Tstep} = (80\% \times \text{Tnominal})/2^7.$$

$$\text{The nominal time period Tnominal} = (1024 + 16) \times \text{TPWMCLK for a 10-bit PWM counter.}$$

The time step size is:

$$\text{Tstep} = (80\% \times \text{Tnominal})/2^7 = 0.8 \times 8.125 \times T_{PWMCLOCK} = 6.5 \times T_{PWMCLOCK}$$

Fig. 4 illustrates a maximum variation in the time period of the Master and Slave after calibration. After frequency calibration, there can be a phase shift of +/-1 x $T_{step}$ (6.5 $T_{PWMCLK}$) due to a difference in frequency. To overcome a phase shift due to a frequency calibration error, either 0, 16 or 32 PWM clock cycles can be chosen or selected to be added.

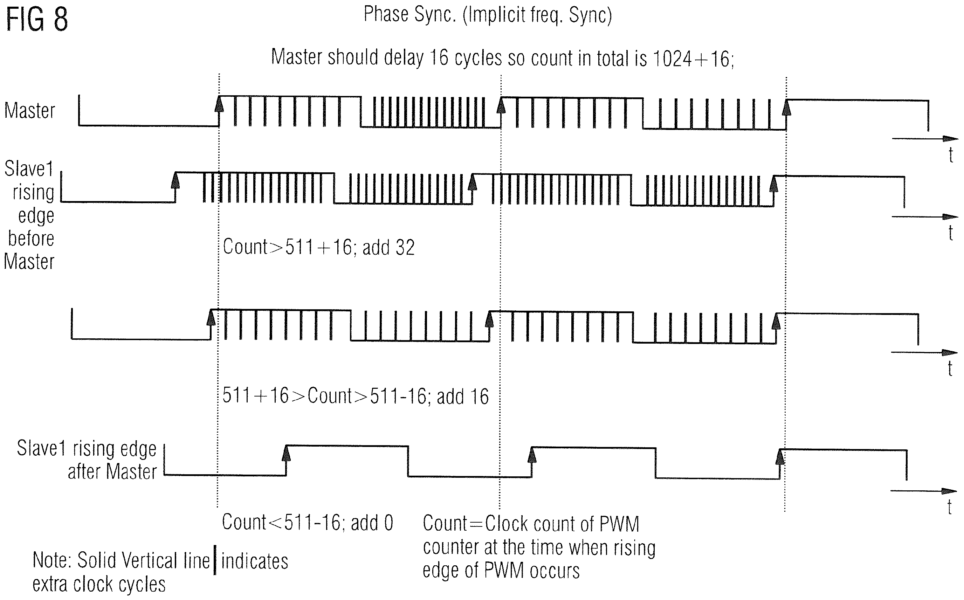

The phase synchronization is illustrated in the signal diagrams of Fig. 8. The first signal shown above is the most significant bit MSB generated by the PWM counter of the frequency and phase synchronization unit 4A of the Master LED controller IC. The MSB forms the PWM synchronization signal distributed to the Slave LED controller ICs via the PWM synchronization signal line PWMSYNC. In the second signal of Fig. 8, the most significant bit MSB of the Slave PWM counter is illustrated.

In the second signal, the Slave rising edge lies before the PWMSYNC signal provided by the Master IC so that 32 additional clock cycles are added. In the third signal of Fig. 8, the Slave rising edge is still before the Master IC but closer so that only 16 additional cycles are added. In the fourth line of the signal diagram of Fig. 8, the Slave signal rising edge is located after the edge of the Master PWM synchronization signal and no additional count cycles are added.

The count is the clock count of the PWM counter at a time when the rising edge of the PWM signal occurs. Once frequency synchronization is achieved, it is assured that for a default count of e.g. 1024 + 16 the time period of the PWM synchronization signal and Slave PWM output signal are within a range of +/-6.5 PWM clock cycles.

Each Slave LED controller IC also comprises a 10-bit PWM counter. The Slave PWM counter can count 1024, 1024 + 16 or 1024 + 32 clock cycles.

To achieve phase synchronization, one proceeds as follows. By default 16 extra clock cycles are added in Master synchronization (1024 + 16). Phase synchronization is achieved by increasing the Slave time period.Up to 32 clock cycles can be added. If the Slave phase leads the Master phase, no clock cycles are added. If the Slave phase and the Master phase are within range of each other, only 16 clock cycles are added to the Slave count. If the Slave phase trails the Master phase, additional 16 (16 + 16 = 32) clock cycles are added as illustrated e.g. in the second line of the signal diagrams shown in Fig. 8. Due to step size of frequency calibration, even after frequency calibration operation is complete, there can be a frequency difference equivalent to Tstep between Master and Slave clock frequencies. Frequency difference causes Master and Slave PWM phases to drift over a period of time. Phase synchronization counterbalances the phase drift due to difference in frequencies.

Adding 16 or 32 clock cycles can be achieved by counting certain counts of the PWM counter twice. Extra counts can be evenly distributed within the PWM cycle. A possible scheme to add PWM counts is as following:

For a 10-bit PWM counter the fourth bit Bit4 of the counter can change its value from 0 to 1, 32 times in 1024 cycles. Similarly, Bit5 can change its value 16 times.

Whenever Bit4 changes its value from 0 to 1, an extra clock cycle is added by counting the same count twice. In this way, in one PWM cycles (1024 clock cycles), 32 extra clock cycles are added with even distribution.

Similarly, 16 clock cycles can be added by adding extra clock cycles for each Bit5 change.

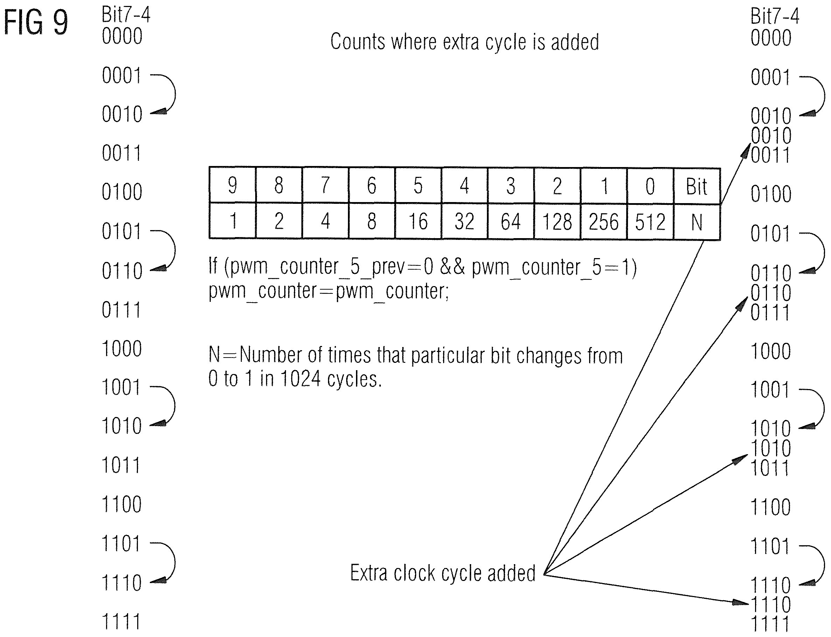

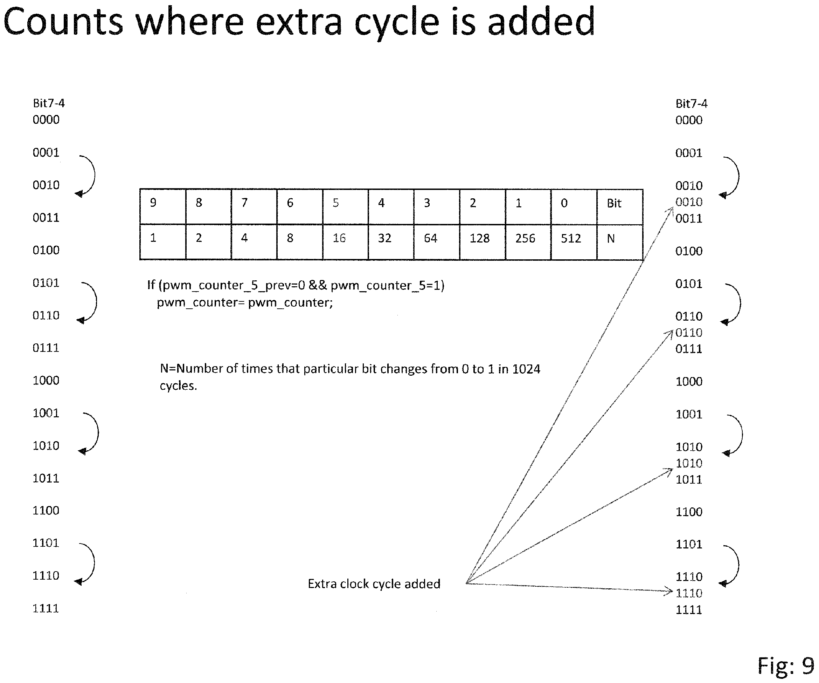

This specific scheme to add PWM counts is also illustrated in Fig. 9. The frequency and phase synchronization performed by the frequency and phase synchronization units 4A, 4B as shown in Fig. 4 is implemented in the digital controller block 3 of the LED controller IC 2 shown in Fig. 3. In a possible embodiment, each LED controller IC comprises a chip select input adapted to apply hard-coded configuration bits used to configure the LED controller IC 2-i either as a Master LED controller IC or as a Slave LED controller IC. In the illustrated embodiment, the chip select input comprises three bits which can be hard-coded. As shown in Fig. 2, the LED controller IC 2-0 to 2-6 are configured as Slave controller ICs and the last LED controller IC 2-7 is configured as a Master LED controller IC. In a specific implementation, three high bits applied to the chip select input are used to configure the LED controller IC as a Master LED controller IC. For the Master LED controller IC, the PWMSYNC pin forms an output pin. For the Slave LED controller ICs, the PWMSYNC pin forms a signal input. In the variant illustrated in Fig. 2, the configuration of the different LED controller ICs is hard-coded. In an alternative embodiment, the chip select input can also be connected to an internal chip selection bus which allows to reconfigure the different LED controller ICs according to the applied bit pattern.

In the illustrated embodiment of Fig. 3, the LED controller 2-i is adapted to control six different LEDs (LED1 to LED6) via associated LED channels. For each LED channel, a PWM signal is output by the LED controller IC 2. Each LED controller IC 2 comprises several individually controlled LED channels used to supply PWM signals to the LEDs of the LED group connected to the respective LED controller IC 2. The individually controlled LED channels are used for adjustment of the light intensity of light generated by the respective LEDs of the LED group.

The LED controller IC 2-i as shown in Fig. 3 further comprises an SPI interface which can be used for communication to provide a light pattern, setting an operation mode, adjustment of PWM frequencies and/or for diagnostic purposes.

The LED controller IC 2-i can comprise in a possible embodiment for each LED channel internal registers to provide different PWM light patterns which can be preprogrammed and selected through the SPI interface. In a possible embodiment, each LED channel of the LED controller IC 2 comprises an open and short detection circuit which is used to bypass an internal switch if an LED has a malfunction. For each LED channel, a channel driver can be provided. The channel drivers of the LED channels receive in a possible embodiment a supply voltage from a charge pump circuit of the LED controller IC 2 as also shown in Fig. 3. Further, for each LED channel, level shifters for the PWM signal can be provided. A local open short detection can be used to bypass the internal switch if the associated LED has a malfunction. An NMOS driver with voltage slope control can be used for each LED channel in a specific implementation. In a further possible embodiment, the LED controller IC 2 can comprise an internal temperature protection which is adapted to generate a warning signal if the LED controller IC is overheating. The LED controller IC 2 shown in Fig. 3 is adapted to control the light intensity of six LED channels. An internal switch can bypass the LED channel to generate a pulse width modulating PWM LED current. Internal registers can be provided for each channel to preprogram different PWM light patterns (PWM duty and shift). Through the SPI interface, the PWM light pattern can be selected or reprogrammed. An unlock scheme together with a 3-bit device selection enables communication with eight LED controller ICs via one SPI controller. An LED current source or a voltage source Vbatt can be used to supply the LED controller IC 2 or to supply the charge pump. The internal charge pump driver generates the supply voltage for the channel driver. The LED controller IC 2 can have several monitor functions to select supply for the device and charge pump. An internal overtemperature sensor can create a warning when the LED controller IC is overheating. A power good pin can indicate that the LED controller IC is operating and is not overheating. For each LED, the LED controller IC can comprise an open and short detection circuit which is used to bypass the internal switch when an LED has a malfunction. The detected error or warning can be indicated via an interrupt pin. The error can be read out and/or corrected via the SPI communication.

The matrix headlamp control apparatus 1 according to the present invention allows multiple LED controller ICs to achieve frequency and phase synchronization without creating any flicker or any drastic change on the brightness of the controlled LEDs. Using the specific synchronization scheme, the LED controller IC can use internal less accurate RC oscillators which are of lower complexity and cheaper as compared to using external more accurate crystal oscillators. The synchronization scheme implemented by the matrix headlamp control apparatus 1 according to the present invention is a dynamic scheme and is also effective against drifting of frequency and phase over time and temperature. The scheme can also operate using an external clock signal. The matrix headlamp control apparatus 1 can be used for controlling the brightness of any headlamp comprising a matrix of light-emitting diodes. The matrix headlamp control apparatus 1 can be used for a headlamp of any kind of vehicles.

**Claims**

**1.** A matrix headlamp control apparatus (1) for controlling a brightness of a headlamp comprising a matrix of light-emitting diodes, LEDs, consisting of LED groups of light-emitting diodes, the matrix headlamp control apparatus (1) comprising:

a plurality of LED controller integrated circuits, ICs (2), said plurality including one LED controller IC configured as a Master LED controller IC (2-7) and the remaining LED controller ICs configured as Slave LED controller ICs (2-0 to 2-6),

wherein each LED controller integrated circuit IC (2-i) is adapted to control an associated LED group, **characterized in that**

each LED controller IC (2-i) is adapted to supply a PWM signal to the respective LED group and the Master LED controller IC is adapted to generate a PWM synchronization signal ($PWM_{sync}$) and to apply the generated PWM synchronization signal ($PWM_{sync}$) to the Slave LED controller ICs to synchronize frequency and phase of all pulse width modulated, PWM, signals.

2. The matrix headlamp control apparatus according to claim 1 comprising a PWM synchronization signal line (PWMSYNC) configured to carry the PWM synchronization signal ($PWM_{sync}$) generated by said Master LED controller IC (2-7) to the Slave LED controller ICs (2-0 to 2-6).

3. The matrix headlamp control apparatus according to claim 2 wherein each LED controller IC (2-i) comprises a digital control block including a frequency and phase synchronization unit (4) adapted to either generate the PWM synchronization signal and output it via the PWM synchronization signal line (PWMSYNC) if the LED controller IC is configured as a Master LED controller IC (2-7),

or receive the PWM synchronization signal as input from the PWM synchronization signal line (PWMSYNC) to synchronize frequency and phase of PWM signals supplied to the LEDs of an LED group connected to the LED controller IC if the LED controller IC is configured as a Slave LED controller IC (2-0 to 2-6).

4. The matrix headlamp control apparatus according to claim 3 wherein the frequency and phase synchronization unit (4A) of the configured Master LED controller IC (2-7) comprises a first oscillator, a first clock divider and a first N-bit PWM counter,

wherein the first oscillator is adapted to generate a first high frequency oscillation clock signal ($CLK_{OSC}$), the first clock divider is adapted to derive a first internal clock signal (CLK) based on the generated first high frequency oscillation clock signal ($CLK_{OSC}$), and to apply the first internal clock signal (CLK) to the first N-bit PWM counter of said frequency and phase synchronization unit (4A) of the configured Master LED controller IC (2-7), and

wherein the Master LED controller IC (2-7) is adapted to output a most significant bit, MSB, of said first N-bit PWM counter via the PWM synchronization signal line (PWMSYNC) to the Slave LED controller ICs (2-0 to 2-6) of said matrix headlamp control apparatus (1).

5. The matrix headlamp control apparatus according to claim 4 wherein the frequency and phase synchronization unit (4B) of each configured Slave LED controller IC (2-0 to 2-6) comprises a frequency synchronization block, a phase synchronization block, a second oscillator, a second clock divider and a second N-bit PWM counter,

wherein the frequency synchronization block is adapted to receive the PWM synchronization signal via the PWM synchronization signal line (PWMSYNC) to generate a frequency calibration signal from the received PWM synchronization signal, and to apply the frequency calibration signal to the second oscillator;

the second oscillator is adapted to generate a second high frequency clock signal ($CLK_{OSC}$), and to apply the generated second high frequency oscillation clock signal ($CLK_{OSC}$) to the second N-bit PWM counter, the frequency synchronization block and the phase synchronization block;

the second clock divider is adapted to divide the second high-frequency clock signal ($CLK_{OSC}$) to a second internal clock signal (CLK), and to apply the second internal clock signal (CLK) to the frequency synchronization block and to the phase synchronization block,

the phase synchronization block is adapted to generate a clock cycle skip value depending on a phase relationship between a most significant bit, MSB, of the second N-bit PWM counter of said frequency and phase synchronization unit (4B) of the configured Slave LED controller IC (2-0 to 2-6) and the PWM synchronization signal received via the PWM synchronization signal line (PWMSYNC), and

wherein the generated clock cycle skip value is added to the counter value of the second N-bit PWM counter.

6. The matrix headlamp control apparatus according to any of the preceding claims 1 to 5 wherein each LED controller IC (2-i) comprises a chip select input adapted to apply hard-coded configuration bits used to configure the LED controller IC (2) as a Master LED controller IC or as a Slave LED controller IC.

7. The matrix headlamp control apparatus according to any of the preceding claims 1 to 6 wherein each LED controller IC (2-i) comprises several individually controlled LED channels used to supply PWM signals to LEDs of the LED group connected to the respective LED controller IC (2-i) for adjustment of the light intensity of light generated by the respective LEDs.

8. The matrix headlamp control apparatus according claims 4 or 5 wherein the first oscillator and/or the second oscillator of the frequency and synchronization unit (4A, 4B) of the LED controller IC (2-i) is an RC oscillator.

9. The matrix headlamp control apparatus according to any of the preceding claims 1 to 8 wherein each of the LED controller ICs (2-i) comprises an SPI interface used for communication to provide a light pattern, setting an operation mode, adjusting a PWM frequency and/or for diagnostic purposes.

10. The matrix headlamp control apparatus according to claim 7 wherein each of the LED controller ICs (2-i) comprises for each LED channel internal registers to provide different PWM light patterns preprogrammed and selected through an SPI interface of the LED controller IC (2).

11. The matrix headlamp control apparatus according to claim 7 or 10 wherein each LED channel of each of the LED controller ICs (2-i) comprises an open and short detection circuit adapted to bypass an internal switch if an LED has a malfunction.

12. The matrix headlamp control apparatus according to any of claims 7, 10 or 11 wherein channel drivers of LED channels of each of the LED controller ICs (2-i) receives a supply voltage from a charge pump circuit of the LED controller IC (2).

13. The matrix headlamp control apparatus according to any of the preceding claims 1 to 12 wherein each of the LED controller ICs (2-i) comprises an internal temperature protection circuit adapted to generate a warning signal if the LED controller IC (2) is overheating.

14. A vehicle having at least one headlamp comprising a matrix of light-emitting diodes LEDs and a matrix headlamp control apparatus (1) according to any of the preceding claims 1 to 13, wherein the matrix headlamp control apparatus (1) is adapted to control the at least one headlamp.

**Patentansprüche**

1. Matrix-Scheinwerfer-Steuervorrichtung (1) zum Steuern einer Helligkeit eines Scheinwerfers, umfassend eine Matrix aus Leuchtdioden, LEDs, die aus LED-Gruppen von Leuchtdioden besteht, wobei die Matrix-Scheinwerfer-Steuervorrichtung (1) umfasst:

   mehrere integrierte Schaltungen, ICs (2), für eine LED-Steuerung, wobei die mehreren eine LED-Steuerung-IC als Master-LED-Steuerung-IC (2-7) eingerichtet und die übrigen LED-Steuerung-ICs als Slave-LED-Steuerung-ICs (2-0 bis 2-6) eingerichtet umfassen,
   wobei jede integrierte Schaltung, IC (2-i), für eine LED-Steuerung ausgelegt ist, um eine zugeordnete LED-Gruppe zu steuern,
   **dadurch gekennzeichnet, dass**
   jede LED-Steuerung-IC (2-i) ausgelegt ist, um der jeweiligen LED-Gruppe ein PWM-Signal zuzuführen, und die Master-LED-Steuerung-IC ausgelegt ist, um ein PWM-Synchronisationssignal ($PWM_{sync}$) zu erzeugen und um das erzeugte PWM-Synchronisationssignal ($PWM_{sync}$) an die Slave-LED-Steuerung-ICs anzulegen, um eine Frequenz und Phase aller pulsweitenmodulierten, PWM-, Signale zu synchronisieren.

2. Matrix-Scheinwerfer-Steuervorrichtung nach Anspruch 1, umfassend eine PWM-Synchronisationssignalleitung (PWMSYNC), die eingerichtet ist, um das PWM-Synchronisationssignal ($PWM_{sync}$), das durch die Master-LED-Steuerung-IC (2-7) erzeugt wird, zu den Slave-LED-Steuerung-ICs (2-0 bis 2-6) zu tragen.

3. Matrix-Scheinwerfer-Steuervorrichtung nach Anspruch 2, wobei jede LED-Steuerung-IC (2-i) einen Digitalsteuerblock umfasst, der eine Frequenz- und Phasensynchronisationseinheit (4) aufweist, die ausgelegt ist, um entweder das PWM-Synchronisationssignal zu erzeugen und es über die PWM-Synchronisationssignalleitung (PWMSYNC) auszugeben, wenn die LED-Steuerung-IC als Master-LED-Steuerung-IC (2-7) eingerichtet ist,

oder das PWM-Synchronisationssignal als Eingabe von der PWM-Synchronisationssignalleitung (PWMSYNC) zu empfangen, um eine Frequenz und Phase von PWM-Signalen zu synchronisieren, die den LEDs einer LED-Gruppe zugeführt werden, die mit der LED-Steuerung-IC verbunden ist, wenn die LED-Steuerung-IC als Slave-LED-Steuerung-IC (2-0 bis 2-6) eingerichtet ist.

4. Matrix-Scheinwerfer-Steuervorrichtung nach Anspruch 3, wobei die Frequenz- und Phasensynchronisationseinheit (4A) der eingerichteten Master-LED-Steuerung-IC (2-7) einen ersten Oszillator, einen ersten Taktteiler und einen ersten N-Bit-PWM-Zähler umfasst,

wobei der erste Oszillator ausgelegt ist, um ein erstes Hochfrequenzoszillation-Taktsignal ($CLK_{osc}$) zu erzeugen, wobei der erste Taktteiler ausgelegt ist, um ein erstes internes Taktsignal (CLK) basierend auf dem erzeugten Hochfrequenzoszillation-Taktsignal ($CLK_{osc}$) abzuleiten und um das erste interne Taktsignal (CLK) an den ersten N-Bit-PWM-Zähler der Frequenz- und Phasensynchronisationseinheit (4A) der eingerichteten Master-LED-Steuerung-IC (2-7) anzulegen, und

wobei die Master-LED-Steuerung-IC (2-7) ausgelegt ist, um ein höchstwertiges Bit (*most significant bit,* MSB) des ersten N-Bit-PWM-Zählers über die PWM-Synchronisationssignalleitung (PWMSYNC) an die Slave-LED-Steuerung-ICs (2-0 bis 2-6) der Matrix-Scheinwerfer-Steuervorrichtung (1) auszugeben.

5. Matrix-Scheinwerfer-Steuervorrichtung nach Anspruch 4, wobei die Frequenz- und Phasensynchronisationseinheit (4A) jeder eingerichteten Slave-LED-Steuerung-IC (2-0 bis 2-6) einen Frequenzsynchronisationsblock, einen Phasensynchronisationsblock, einen zweiten Oszillator, einen zweiten Taktteiler und einen zweiten N-Bit-PWM-Zähler umfasst,

wobei der Frequenzsynchronisationsblock ausgelegt ist, um das PWM-Synchronisationssignal über die PWM-Synchronisationssignalleitung (PWMSYNC) zu empfangen, um ein Frequenzkalibrierungssignal aus dem empfangenen PWM-Synchronisationssignal zu erzeugen und um das Frequenzkalibrierungssignal an den zweiten Oszillator anzulegen;

wobei der zweite Oszillator ausgelegt ist, um ein zweites Hochfrequenz-Taktsignal ($CLK_{osc}$) zu erzeugen und um das erzeugte zweite Hochfrequenzoszillation-Taktsignal ($CLK_{osc}$) an den zweiten N-Bit-PWM-Zähler, den Frequenzsynchronisationsblock und den Phasensynchronisationsblock anzulegen;

wobei der zweite Taktteiler ausgelegt ist, um das zweite Hochfrequenz-Taktsignal (CLKosc) zu einem zweiten internen Taktsignal (CLK) zu teilen und um das zweite interne Taktsignal (CLK) an den Frequenzsynchronisationsblock und an den Phasensynchronisationsblock anzulegen,

wobei der Phasensynchronisationsblock ausgelegt ist, um einen Taktzyklus-Auslasswert in Abhängigkeit von einer Phasenbeziehung zwischen einem höchstwertigen Bit, MSB, des zweiten N-Bit-PWM-Zählers der Frequenz- und Phasensynchronisationseinheit (4B) der eingerichteten Slave-LED-Steuerung-IC (2-0 bis 2-6) und dem PWM-Synchronisationssignal, das über die PWM-Synchronisationssignalleitung (PWMSYNC) empfangen wird, zu erzeugen, und

wobei der erzeugte Taktzyklus-Auslasswert zu dem Zählerwert des zweiten N-Bit-PWM-Zählers addiert wird.

6. Matrix-Scheinwerfer-Steuervorrichtung nach einem der vorhergehenden Ansprüche 1 bis 5, wobei jede LED-Steuerung-IC (2-i) eine Chipauswahleingabe umfasst, die ausgelegt ist, um hartkodierte Konfigurationsbits, die verwendet werden, um die LED-Steuerung-IC (2) als Master-LED-Steuerung-IC oder als Slave-LED-Steuerung-IC einzurichten, anzulegen.

7. Matrix-Scheinwerfer-Steuervorrichtung nach einem der vorhergehenden Ansprüche 1 bis 6, wobei jede LED-Steuerung-IC (2-i) mehrere einzeln gesteuerte LED-Kanäle umfasst, die verwendet werden, um LEDs der LED-Gruppe, die mit der jeweiligen LED-Steuerung-IC (2-i) verbunden ist, zur Einstellung der Lichtintensität von Licht, das durch die jeweiligen LEDs erzeugt wird, PWM-Signale zuzuführen.

8. Matrix-Scheinwerfer-Steuervorrichtung nach Anspruch 4 oder 5, wobei der erste Oszillator und/oder der zweite Oszillator der Frequenz- und Phasensynchronisationseinheit (4A, 4B) der LED-Steuerung-IC (2-i) ein RC-Oszillator ist.

9. Matrix-Scheinwerfer-Steuervorrichtung nach einem der vorhergehenden Ansprüche 1 bis 8, wobei jede der LED-Steuerung-ICs (2-i) eine SPI-Schnittstelle umfasst, die zur Kommunikation, um ein Lichtmuster bereitzustellen, zum Festlegen eines Betriebsmodus, zum Einstellen einer PWM-Frequenz und/oder zu diagnostischen Zwecken verwendet wird.

10. Matrix-Scheinwerfer-Steuervorrichtung nach Anspruch 7, wobei jede der LED-Steuerung-ICs (2-i) für jeden LED-Kanal interne Register umfasst, um unterschiedliche PWM-Lichtmuster bereitzustellen, die durch eine SPI-Schnittstelle der LED-Steuerung-IC (2) vorprogrammiert und ausgewählt werden.

11. Matrix-Scheinwerfer-Steuervorrichtung nach Anspruch 7 oder 10, wobei jeder LED-Kanal jeder der LED-Steuerung-ICs (2-i) eine offene und kurze Erfassungsschaltung umfasst, die ausgelegt ist, um einen internen Schalter zu umgehen, wenn eine LED eine Fehlfunktion aufweist.

12. Matrix-Scheinwerfer-Steuervorrichtung nach einem der Ansprüche 7, 10 oder 11, wobei Kanal-Treiber von LED-Kanälen jeder der Steuerung-ICs (2-i) eine Versorgungsspannung von einer Ladungspumpenschaltung der LED-Steuerung-IC (2) empfangen.

13. Matrix-Scheinwerfer-Steuervorrichtung nach einem der vorhergehenden Ansprüche 1 bis 12, wobei jede der LED-Steuerung-ICs (2-i) eine Interntemperatur-Schutzschaltung umfasst, die ausgelegt ist, um ein Warnsignal zu erzeugen, wenn die LED-Steuerung-IC (2) überhitzt.

14. Fahrzeug mit mindestens einem Scheinwerfer, umfassend eine Matrix aus Leuchtdioden, LEDs, und eine Matrix-Scheinwerfer-Steuervorrichtung (1) nach einem der vorhergehenden Ansprüche 1 bis 13, wobei die Matrix-Scheinwerfer-Steuervorrichtung (1) ausgelegt ist, um den mindestens einen Scheinwerfer zu steuern.

## Revendications

1. Appareil de commande de phare à matrice (1) permettant de commander la luminosité d'un phare comprenant une matrice de diodes électroluminescentes, DEL, composée de groupes de diodes électroluminescentes DEL, l'appareil de commande de phare à matrice (1) comprenant :

   une pluralité de circuits intégrés de commande de DEL (2), ladite pluralité incluant un circuit intégré de commande de DEL, configuré en tant que circuit intégré maître de commande de DEL (2-7) et les circuits intégrés de commande de DEL restants, configurés en tant que circuits intégrés esclaves de commande de DEL (2-0 à 2-6), dans lequel chaque circuit intégré de commande de DEL (2-i) est conçu pour commander un groupe de DEL associé,
   **caractérisé en ce que** :
   chaque circuit intégré de commande de DEL (2-i) est conçu pour fournir un signal MLI au groupe de DEL respectif et le circuit intégré maître de commande de DEL est conçu pour produire un signal de synchronisation MLI (PWM$_{sync}$) et pour appliquer le signal de synchronisation MLI (PWM$_{sync}$) produit aux circuits intégrés esclaves de commande de DEL afin de synchroniser la fréquence et la phase de tous les signaux modulés en largeur d'impulsion, MLI.

2. Appareil commande de phare à matrice, selon la revendication 1, comprenant une ligne de signal de synchronisation MLI (PWMSYNC) conçue pour acheminer le signal de synchronisation MLI (PWM$_{sync}$) produit par ledit circuit intégré maître de commande de DEL (2-7) vers les circuits intégrés esclaves de commande de DEL (2-0 à 2-6).

3. Appareil de commande de phare à matrice, selon la revendication 2, dans lequel chaque circuit intégré de commande de DEL (2-i) comprend un bloc de commande numérique comportant une unité de synchronisation de fréquence et de phase (4) conçue pour :

   soit produire le signal de synchronisation MLI et le délivrer en sortie par le biais de la ligne de signal de synchronisation MLI (PWMSYNC), si le circuit intégré de commande de DEL est configuré en tant que circuit intégré maître de commande de DEL (2-7),
   soit recevoir le signal de synchronisation MLI en tant qu'entrée en provenance de la ligne de signal de synchronisation MLI (PWMSYNC) pour synchroniser la fréquence et la phase de signaux MLI fournis aux DEL d'un groupe de DEL connecté au circuit intégré de commande de DEL, si le circuit intégré de commande de DEL est configuré en tant que circuit intégré esclave de commande de DEL (2-0 à 2-6).

4. Appareil de commande de phare à matrice, selon la revendication 3, dans lequel l'unité de synchronisation de fréquence et de phase (4A) du circuit intégré maître de commande de DEL configuré (2-7) comprend un premier oscillateur, un premier diviseur d'horloge et un premier compteur MLI sur N bits, dans lequel le premier oscillateur est conçu pour produire un premier signal d'horloge d'oscillation à haute fréquence (CLK$_{OSC}$), le premier diviseur d'horloge est conçu pour déduire un premier signal d'horloge interne (CLK) sur la base du premier signal d'horloge d'oscillation à haute fréquence produit (CLK$_{OSC}$), et pour appliquer le premier signal d'horloge interne (CLK) au premier compteur MLI sur N bits de ladite unité de synchronisation de fréquence et de phase (4A) du circuit intégré maître de commande de DEL configuré (2-7), et

dans lequel le circuit intégré maître de commande de DEL (2-7) est conçu pour délivrer le bit le plus significatif *(most significant bit,* MSB), dudit premier compteur MLI sur N bits par le biais de la ligne de signal de synchronisation MLI (PWMSYNC) aux circuits intégrés esclaves de commande de DEL (2-0 à 2-6) dudit appareil de commande de phare à matrice (1).

5. Appareil de commande de phare à matrice, selon la revendication 4, dans lequel l'unité de synchronisation de fréquence et de phase (4B) de chaque circuit intégré esclave de commande de DEL configuré (2-0 à 2-6) comprend un bloc de synchronisation de fréquence, un bloc de synchronisation de phase, un second oscillateur, un second diviseur d'horloge et un second compteur MLI sur N bits,

dans lequel le bloc de synchronisation de fréquence est conçu pour recevoir le signal de synchronisation MLI par le biais de la ligne de signal de synchronisation MLI (PWMSYNC) afin de produire un signal d'étalonnage en fréquence à partir du signal de synchronisation MLI reçu, et pour appliquer le signal d'étalonnage en fréquence au second oscillateur ;

le second oscillateur est conçu pour produire un second signal d'horloge à haute fréquence (CLK$_{osc}$), et pour appliquer le second signal d'horloge d'oscillation à haute fréquence produit (CLK$_{osc}$) au second compteur MLI sur N bits, au bloc de synchronisation de fréquence et au bloc de synchronisation de phase ;

le second diviseur d'horloge est conçu pour diviser le second signal d'horloge à haute fréquence (CLK$_{osc}$) en un second signal d'horloge interne (CLK) et pour appliquer le second signal d'horloge interne (CLK) au bloc de synchronisation de fréquence et au bloc de synchronisation de phase,

le bloc de synchronisation de phase est conçu pour engendrer une valeur de saut de cycle d'horloge en fonction d'une relation de phase entre le bit le plus significatif, MSB, du second compteur MLI sur N bits de ladite unité de synchronisation de fréquence et de phase (4B) du circuit intégré esclave de commande de DEL configuré (2-0 à 2-6) et le signal de synchronisation MLI reçu par le biais de la ligne de signal de synchronisation MLI (PWMSYNC), et dans lequel la valeur engendrée de saut de cycle d'horloge est ajoutée à la valeur de compteur du second compteur MLI sur N bits.

6. Appareil de commande de phare à matrice, selon l'une quelconque des revendications 1 à 5 précédentes, dans lequel chaque circuit intégré de commande de DEL (2-i) comprend une entrée de sélection de circuit destinée à appliquer des bits de configuration codés en dur, servant à configurer le circuit intégré de commande de DEL (2) en tant que circuit intégré maître de commande de DEL ou en tant que circuit intégré esclave de commande de DEL.

7. Appareil de commande de phare à matrice, selon l'une quelconque des revendications 1 à 6 précédentes, dans lequel chaque circuit intégré de commande de DEL (2-i) comprend plusieurs canaux de DEL commandés individuellement, servant à fournir des signaux MLI à des DEL du groupe de DEL connecté au circuit intégré de commande de DEL respectif (2-i) à des fins de réglage de l'intensité lumineuse de la lumière engendrée par les DEL respectives.

8. Appareil de commande de phare à matrice, selon la revendication 4 ou 5, dans lequel le premier oscillateur et/ou le second oscillateur de l'unité de synchronisation de fréquence et de phase (4A, 4B) du circuit intégré de commande de DEL (2-i) est ou sont un oscillateur RC.

9. Appareil de commande de phare à matrice, selon l'une quelconque des revendications 1 à 8 précédentes, dans lequel chacun des circuits intégrés de commande de DEL (2-i) comprend une interface SPI utilisée à des fins de communication pour procurer un modèle de lumière, définir un mode de fonctionnement, régler une fréquence MLI et/ou à des fins de diagnostic.

10. Appareil de commande de phare à matrice, selon la revendication 7, dans lequel chacun des circuits intégrés de commande de DEL (2-i) comprend pour chaque canal de DEL des registres internes pour procurer différents modèles de lumière MLI préprogrammés et sélectionnés par le biais d'une interface SPI du circuit intégré de commande de DEL (2).

11. Appareil de commande de phare à matrice, selon la revendication 7 ou 10, dans lequel chaque canal de DEL de chacun des circuits intégrés de commande de DEL (2-i) comprend un circuit de détection de circuit ouvert et de court-circuit, conçu pour contourner un commutateur interne si une DEL présente un défaut de fonctionnement.

**12.** Appareil de commande de phare à matrice, selon l'une quelconque des revendications 7, 10 ou 11, dans lequel les circuits d'attaque de canaux des canaux de DEL de chacun des circuits intégrés de commande de DEL (2-i) reçoivent une tension d'alimentation en provenance d'un circuit de pompe de charge du circuit intégré de commande de DEL (2).

**13.** Appareil de commande de phare à matrice, selon l'une quelconque des revendications 1 à 12 précédentes, dans lequel chacun des circuits intégrés de commande de DEL (2-i) comprend un circuit de protection thermique interne, conçu pour délivrer un signal d'avertissement si le circuit intégré de commande de DEL (2) est en surchauffe.

**14.** Véhicule comportant au moins un phare comprenant une matrice de diodes électroluminescentes DEL et un appareil de commande de phare à matrice selon l'une quelconque des revendications 1 à 13 précédentes, dans lequel l'appareil de commande de phare à matrice (1) est conçu pour commander l'au moins un phare.

FIG 1

# FIG 2

EP 3 496 513 B1

FIG 3

# FIG 4

4

MASTER-IC    2-i

Calibration_id[6:0]=
1000000

Oscillator:
3.2 MHz

M1
÷m

M2
÷4

PWMClk

Skip increment after
every 64 cydes (Fixed)

0    512   1023

PWMOUT:
MSB of PWMCounter

10-bit PWM Counter
0→1023

EN=1    PWMSYNC

4A

SLAVE-IC    2-j

7-bit Freq-Calibration:
Calibration_id[6:0]

Freq Sync

PWMClk

Phase Sync

EN=0    PWMSYNC

No skip OR
Skip increment after
every 64 OR 32 cycles

Oscillator:
3.2 MHz

M1
÷m

M2
÷4

10-bit PWM Counter
0→1023

4B

EP 3 496 513 B1

# FIG 5

1024+16 Cycles; $T_{PWMsync}$

PWMsync
Slave pwm clock Counter

$\langle 0 \rangle\langle 1 \rangle\langle 2 \rangle \cdots \langle n \rangle$

$t$

# FIG 6

$T_{nominal}$

Calibration(nom)=
100_0000

$T_{min} = (100\% - 40\%) * T_{nominal}$

Calibration(min)=
000_0000

$T_{max} = (100\% + 40\%) * T_{nominal}$

Calibration(max)=
111_1111

# FIG 7

$T_{master}$

$T_{slave1} = T_{master}$

$T_{step}$

$T_{step}$

# FIG 8

Phase Sync. (Implicit freq. Sync)

Master should delay 16 cycles so count in total is 1024+16;

Master

Slave1
rising
edge
before
Master

Count>511+16; add 32

511+16>Count>511−16; add 16

Slave1 rising edge
after Master

Count<511−16; add 0

Count=Clock count of PWM
counter at the time when rising
edge of PWM occurs

Note: Solid Vertical line| indicates
extra clock cycles

EP 3 496 513 B1

# FIG 9

EP 3 496 513 B1

Bit7-4
0000

Counts where extra cycle is added

Bit7-4
0000

0001
0010

0001
0010
0010
0011

0011

0100

| 9 | 8 | 7 | 6 | 5 | 4 | 3 | 2 | 1 | 0 | Bit |
|---|---|---|---|---|---|---|---|---|---|-----|
| 1 | 2 | 4 | 8 | 16 | 32 | 64 | 128 | 256 | 512 | N |

0100

0101
0110

If (pwm_counter_5_prev=0 && pwm_counter_5=1)
pwm_counter=pwm_counter;

0101
0110
0110
0111

0111

1000

N=Number of times that particular bit changes from
0 to 1 in 1024 cycles.

1000

1001
1010

1001
1010
1010
1011

1011

1100

1100

1101
1110

Extra clock cycle added

1101
1110
1110
1111

1111

# Counts where extra cycle is added

EP 3 496 513 B1

Bit7-4
0000

0001

0010

0011

0100

0101

0110

0111

1000

1001

1010

1011

1100

1101

1110

1111

| 9 | 8 | 7 | 6 | 5 | 4 | 3 | 2 | 1 | 0 | Bit |
|---|---|---|---|---|---|---|---|---|---|-----|
| 1 | 2 | 4 | 8 | 16 | 32 | 64 | 128 | 256 | 512 | N |

If (pwm_counter_5_prev=0 && pwm_counter_5=1)
    pwm_counter= pwm_counter;

N=Number of times that particular bit changes from 0 to 1 in 1024 cycles.

Extra clock cycle added

Bit7-4
0000

0001

0010
0010
0011

0100

0101

0110
0110
0111

1000

1001

1010
1010
1011

1100

1101

1110
1110
1111

Fig: 9

**EP 3 496 513 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017253172 A1